**Europäisches Patentamt**

**European Patent Office**

**Office européen des brevets**

(19)

(11) Veröffentlichungsnummer: **0 082 942**

**A1**

(12) # EUROPÄISCHE PATENTANMELDUNG

(21) Anmeldenummer: **82110394.2**

(22) Anmeldetag: **11.11.82**

(51) Int. Cl.³: **F 02 B 75/32**
**F 16 J 1/22, F 02 B 19/10**
**F 02 B 23/08, F 02 F 3/28**

(30) Priorität: **24.12.81 DE 3151422**

(43) Veröffentlichungstag der Anmeldung:
**06.07.83 Patentblatt 83/27**

(84) Benannte Vertragsstaaten:
**AT BE CH DE FR GB IT LI LU NL SE**

(71) Anmelder: **Burgsmüller, Karl**
**Hainbergstrasse 1**
**D-3350 Kreiensen(DE)**

(72) Erfinder: **Burgsmüller, Karl**
**Hainbergstrasse 1**
**D-3350 Kreiensen(DE)**

(74) Vertreter: **Kosel, Peter, Dipl.-Ing. et al,**
**Patentanwälte Dipl.-Ing. Horst Röse Dipl.-Ing. Peter**
**Kosel Postfach 129 Odastrasse 4a**
**D-3353 Bad Gandersheim(DE)**

(54) **Hubkolben-Brennkraftmaschine.**

(57) Die Maschine besitzt ein Kolbenaggregat (24) aus einem geteilten Gleitkolbenteil (3) und einer äußeren Hohlkugel (2) die in einer ersten Kalotte (38) des Gleitkolbenteils (3) schwenkbar gelagert ist. Die Hohlkugel (2) ist an dem Pleuel (4) befestigt und enthält eine innere Hohlkugel (1), die einen inneren Verbrennungsraum (26) umschließt. Der innere Verbrennungsraum (26) ist durch eine beide Hohlkugeln (1,2) durchdringende, mit dem Pleuel (4) koaxiale Strahldüse (5) ständig mit einem äußeren Verbrennungsraum (25) verbunden. Die Hohlkugeln (1,2) durchdringende Füllkanäle (6) verbessern die Füllung des inneren Verbrennungsraums (26). Ein Zwischenraum (7) zwischen den Hohlkugeln (1,2) kann mit einer verdampfbaren Flüssigkeit beschickt werden. Der Dampf strömt, durch das Gleitkolbenteil (3) gesteuert, durch Strahldüsen (12) parallel zum Pleuel (4) in das Kurbelgehäuse (27).

EP 0 082 942 A1

./...

Fig.1

DIPL.-ING. HORST RÖSE     DIPL.-ING. PETER RÖSE  0082942
PATENTANWÄLTE

Unsere Akten-Nr.: 1716/14EP   Bad Gandersheim, 10. Nov. 1982
01 Karl BURGSMÜLLER

## Hubkolben-Brennkraftmaschine

Die Erfindung betrifft eine Hubkolben-Brennkraftmaschine gemäß dem Oberbegriff des Anspruchs 1.

Bei einer bekannten Maschine dieser Art (meine DE-Offenlegungsschrift 30 12 022) ist die wenigstens eine Strahldüse 18
fest mit einem an dem Pleuel 6 angelenkten Hubkolben 7
verbunden, in dem sich der innere Verbrennungsraum 21
befindet. Nach Beendigung des Verdichtungshubes tritt
aus der Strahldüse 18 mit erhöhter Geschwindigkeit ein
Schubstrahl der Verbrennungsgase mit einem Reaktionsimpuls aus, der sich als zusätzliche Kraft auf den Hubkolben
7 auswirkt. Dieser Effekt wird in der technischen
Literatur zukünftig als der "Burgsmüller-Strahlreaktionsimpuls zwischen Kommunizierenden Verbrennungsräumen" bezeichnet werden. Bei der bekannten Maschine wirkt dieser
Strahlreaktionsimpuls jedoch nicht in Richtung der Längsachse des Pleuels 6. Dies führt insbesondere bei größeren
Winkelausschlägen der Pleuel - gegenüber der Kolbenlängsachse zu unerwünschten, Reibungsverluste verursachenden
Querkräften auf den Hubkolben 7. Außerdem werden der bekannten Maschine zur Wärmeabfuhr besonders der inneren
wärmebelasteten Bauteile der Zylinder, der Zylinderkopf,
usw. in konventioneller Weise durch Wasser, Luft, Öl oder
sonst wie von außen bzw. gelegentlich auch der Hubkolben
von einem der Medien direkt gekühlt. Die so abgeführte
Wärme ist also reine Verlustwärme, die nicht in mechanische oder gar Strahlenergie umgesetzt werden kann.

Aus der US-PS 4 142 500 ist es an sich bekannt, ein Kolbenaggregat aus einem Gleitkolbenteil 34 und einem Kolbenkopf 46 aufzubauen. Der Kolbenkopf 46 ist über einen Schaft 45 fest mit einem Pleuel 40 verbunden, erstreckt sich über die gesamte Querschnittsfläche eines Zylinders 10 und ist unten mit einer konvexen Kalotte in einer komplementären konkaven Kalotte eines Flansches 36 des Gleitkolbenteils 34 schwenkbar gelagert. Eine an dem Pleuel 40 festgelegte Stützkonsole 54 gleitet mit einer oberen konkaven Kalotte an einer unteren komplementären konvexen Kalotte des Flansches 36. Der Kolbenkopf 46 weist jedoch einen inneren Verbrennungsraum nicht auf. Die unerwünschten Querkräfte wirken sich von dem Kolbenkopf 46 über das Gleitkolbenteil 34 voll auf die Zylinderwand aus und führen zu Leistungsverlust und einseitigem Verschleiß. Der Erfindung liegt die Aufgabe zugrunde, den Strahlreaktionsimpuls des die wenigstens eine Strahldüse verlassenden Schubstrahls optimal zu nutzen und praktisch verlustlos an den Kurbelzapfen zu bringen. Außerdem soll der thermische Wirkungsgrad der Maschine verbessert werden.

Diese Aufgabe ist durch die Merkmale des Kennzeichnungsteils des Anspruchs 1 gelöst. Der Strahlreaktionsimpuls wirkt hier also stets in Richtung der Pleuellängsachse. Dadurch sind nachteilige, den Wirkungsgrad der Maschine mindernde, zwischen dem Hohlkörper und dem Gleitkolbenteil einerseits und zwischen dem Gleitkolbenteil und dem Zylinder andererseits wirkende Querkräfte vermieden. Der gesamte Strahlreaktionsimpuls wird praktisch verlustfrei auf den Kurbelzapfen übertragen. Vorteilhaft ist ferner, daß bei dieser Anordnung der aus der wenigstens einen Strahldüse austretende Schubstrahl einen sich stets ändernden Bereich des Zylinderkopfes trifft. Dadurch wird eine örtliche Überbeanspruchung des Zylinderkopfes vermieden.

Die Ausführungsform gemäß Anspruch 2 ist baulich besonders einfach. Der Durchmesser des Hohlkörpers ist geringer als der des Gleitkolbenteils, so daß Hohlkörper und Gleitkolbenteil zusammen die wirksame Fläche eines Kolbenaggregats bilden. Vorzugsweise ist der Kolben in einer Ebene durch den Mittelpunkt des hohlkugelförmigen Hohlkörpers quergeteilt, wobei die beiden Teile des Gleitkolbenteils durch beliebige Befestigungsmittel aneinander befestigt sind.

Gemäß Anspruch 3 ergibt sich eine besonders günstige Konstruktion des Kolbenaggregats. Der Hohlkörper ist vorzugsweise fest mit dem äußeren Hohlkörper verbunden. Der innere Hohlkörper ist dabei vorzugsweise als Hohlkugel ausgebildet. Der äußere Hohlkörper bildet zusammen mit dem Gleitkolbenteil die wirksame Fläche eines Kolbenaggregats.

Gemäß Anspruch 4 läßt sich der thermische Wirkungsgrad der Maschine erheblich steigern. Der Zwischenraum zwischen den beiden Hohlkörpern wirkt als eine Art "Papinscher Topf". Als Flüssigkeit eignet sich vor allem aufbereitetes Wasser. Der hochgespannte Dampf strömt mit Beginn des Aufwärtshubes des Kolbenaggregats aus dem Zwischenraum strahlartig durch die wenigstens eine Strahldüse in das Kurbelgehäuse der Maschine. Der Reaktionsimpuls dieses wenigstens einen Dampfstrahls treibt das Kolbenaggregat vom unteren Totpunkt zum oberen Totpunkt und zieht über das Pleuel den Kurbelzapfen in Richtung des oberen Totpunkts. Der in das weitgehend von Totraum befreite Kurbelgehäuse einströmende hochgespannte Dampf baut in dem Kurbelgehäuse und in dem unter dem Kolbenaggregat befindlichen Zylinderraum einen Überdruck auf und übt auf das Kolbenaggregat eine zusätzliche, zum oberen Totpunkt hin gerichtete Druckkraft aus. Schließlich strömt der entspannte Dampf durch die sich dann öffnenden Auslaßöffnungen des Zylinders nach außen ab.

Die Merkmale des Anspruchs 5 verhindern eine Relativdrehung des Gleitkolbenteils gegenüber den Hohlkörpern.

Anspruch 6 kennzeichnet eine günstige Möglichkeit, die Flüssigkeit in den Zwischenraum selbsttätig gesteuert einzubringen. Dies geschieht vorzugsweise im Bereich des unteren Totpunkts des Triebwerks.

Eine andere Möglichkeit der Flüssigkeitseinbringung in den Zwischenraum besteht gemäß Anspruch 7. Die Hohlfeder kann z.B. aus Stahlrohr bestehen.

Gemäß Anspruch 8 wird in strömungstechnisch günstiger Weise ein sich zu den Dampf-Strahldüsen vergrößernder Zwischenraum geschaffen.

Gemäß Anspruch 9 läßt sich die Füllung des inneren Verbrennungsraums erheblich verbessern. Die Füllung dieses inneren Verbrennungsraums geschieht nun nicht mehr ausschließlich durch die wenigstens eine Strahldüse hindurch. Dadurch kann die kleinste lichte Querschnittsfläche der wenigstens einen Strahldüse verhältnismäßig klein und für die Schubstrahlbildung optimal gestaltet werden. Dadurch wird der Reaktionsschubeffekt des wenigstens einen aus dem inneren Verbrennungsraum austretenden Gasstrahls beträchtlich erhöht und der Spitzenwert dieses Schubeffekts in das geometrisch günstigere Feld des Kurbelzapfenwegs verlagert. Dies führt zu einer Verringerung des spezifischen Brennstoffverbrauchs. Vorzugsweise wird der wenigstens eine Füllkanal nahe dem Ende des Kompressionshubes geschlossen.

Durch die Merkmale des Anspruchs 10 gelangt noch weniger Verlustwärme ungenutzt nach außen. Vielmehr wird möglichst viel Wärme in grundsätzlicher Abkehr von der bisher üblichen Betriebsweise nach innen hin im Kolbenaggregat konzentriert und von dort aufgrund der großen Wärmeübergangsflächen zwischen dem Zylinder und dem Gleitkolbenteil einerseits und dem Gleitkolbenteil und dem äußeren Hohlkörper andererseits an die in dem Zwischenraum befindliche Flüssigkeit zu deren Verdampfung abgegeben.

Die Erfindung wird nachfolgend anhand der in den Zeichnungen dargestellten Ausführungsbeispiele näher erläutert. Es zeigen:

Fig. 1 einen Längsschnitt durch einen Motor mit Doppelhohlkugel im Kolben,

Fig. 2 die Schnittansicht gemäß Linie 2-2 in Fig. 1 durch das Kolbenaggregat und

Fig. 3 einen Längsschnitt durch einen anderen Motor mit einfacher Kugel im Kolben.

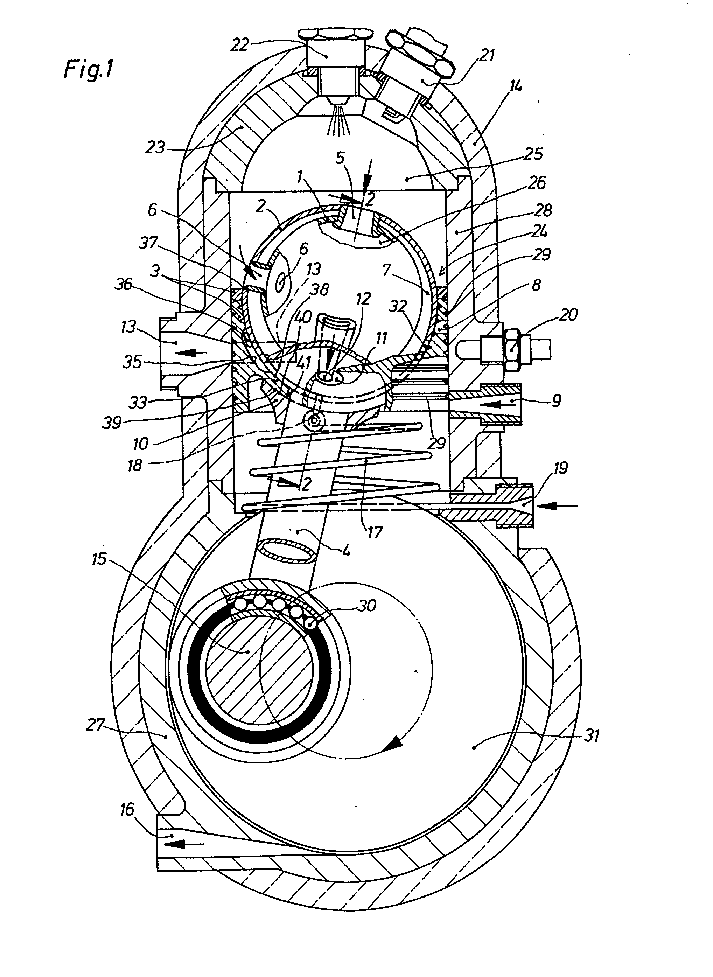

Eine Hohlkugel 2 bildet in Fig. 1 zusammen mit einem quer geteilten Gleitkolbenteil 3 ein Kolbenaggregat 24. Innerhalb der Hohlkugel 2 befindet sich eine weitere Hohlkugel 1. In der gemeinsamen Mittellinie der Hohlkugeln 1, 2 und eines ovalen Pleuels 4 zu einem Zylinderkopf 23 hingewandt, durchdringt eine aus möglichst warmfestem, verschleißarmen Material hergestellte Strahldüse 5 die von den im Abstand voneinander angeordneten Wänden der Hohlkugeln 1, 2 gebildete Doppelwand. Die Strahldüse 5 möge an lichtem Querschnitt beispielsweise beinhalten ca. 1/200 des lichten Querschnitts des Zylinders 28 von beispielsweise ca. 50 $cm^2$, also beispielsweise ca. 25 $mm^2$ (im Versuch mit Erfolg erprobt). Die Strahldüse 5 kann auch zur besseren Wärmeverteilung durch mehrere, beispielsweise vier Strahldüsen um die Mittellinie der Strahldüse 5 im gleichen Abstand von und parallel zu dieser angeordnet, ersetzt sein, die insgesamt etwa den gleichen lichten Querschnitt wie die Strahldüse 5 aufweisen.

Beim Verdichtungshub wird das gasförmige Verdichtungsgut, das auch schon die Treibstoff-Charge enthalten mag, bei mittlerer Drehzahl der Maschine gemäß Fig. 1 nahezu widerstandslos durch die Strahldüse 5 hindurch in den inneren Kugelraum der Hohlkugel 1, den inneren Verbrennungsraum 26, befördert. Da dieser beispielsweise doppelt so groß ausgebildet ist wie der Verbrennungsraum für das gleiche Hubvolumen bisher gebräuchlicher Maschinen, nämlich ca. 90 cm$^3$ anstelle bisher ca. 45 cm$^3$ beinhaltet, wird gegenüber dem Stand der Technik mehr als 50 % der Energie für die Kompressionsarbeit eingespart. Diese eingesparte Energie der Schwungmasse wird nicht entnommen, sondern steht der Antriebsenergie zusätzlich zur Verfügung.

Nachdem im Ablauf des Zyklus der Maschine der Initial-Zündfunke einer Zündkerze 21 oder die Höhe der Kompressionstemperatur das Brenngut nahe dem oberen Totpunkt für die Expansion bzw. Leistungsabgabe im Arbeitshub entflammt hat, aber nur ein geringer Teil der brennenden Charge in dieser Position des Kolbenaggregats 24 mit den Begrenzungsflächen eines äußeren Verbrennungsraums 25 in Berührung kommt, wird auch der sonst durch das Temperaturgefälle zum Zylinderkopf 23 hin unvermeidbaren, unerwünschten Kühlung der schon entflammten Charge an diesen Begrenzungsflächen - obendrein bei kaum aus dem oberen Totpunkt gewandertem Kurbelzapfen 15, also bei für die Umsetzung dieser Kraft in Arbeit ungeeigneten geometrischen Situation - vorgebeugt. Somit wird aber die Entfaltung der geballten Energie des Chargenteils in dem in der hochwarmen Hohlkugel 1 angeordneten inneren Verbrennungsraum 26 bei weitem weniger behindert, als bisher zu dulden war.

Sobald im Ablauf des weiteren Arbeitshubs bei größerem Winkelausschlag des Kurbelzapfens 15 aus der oberen Totpunktlage der rapide Anstieg des Raumvolumens im über dem Kolbenaggregat 24 befindlichen äußeren Verbrennungsraum 25 aus einem dort sich entwickelnden Turbulenzstrahl, der erwünscht ist für die Auflockerung der Grenzschichten der Charge, die Entfaltung eines hochgeschwinden Schubstrahls aus der Strahldüse 5 heraus in den äußeren Verbrennungsraum 25 hinein zuläßt (gezügelter Strahl), erreicht im vorliegenden Fall diese Strahlgeschwindigkeit, schon erheblich bevor die $90^o$-Lage des Kurbelzapfens 15 erreicht ist, etwa das 200-fache der Spitzengeschwindigkeit des Kolbenaggregats 24, die beispielsweise ca. 25m/s beträgt, nämlich ca. 5.000 m/s. Bei mit einem Benzin-Luftgemisch von 1 : 14 Gewichtsteilen voll angefülltem, 298 $cm^3$ umfassenden Hubraum ergibt sich nach Newton ein Strahlreaktionsimpuls von beachtlicher Größe, der sich zusätzlich zur Leistung der im äußeren Verbrennungsraum 25 erfolgenden Normalexpansion bei Vermeidung jeder lästigen, bremsenden Querkraft deshalb dem Kurbelzapfen 15 ungemindert mitteilt, weil die Richtung der Strahlreaktion stets in der Normalen zum Kurbelzapfen 15 verbleibt, und weil ferner die Strahlreaktion - ganz im Gegensatz zur herkömmlichen Expansion im Zylinderraum - in dem Bereich des größten Ausschlages des Kurbelzapfens 15, also bei günstiger geometrischer Position für die Umsetzung dieser Kraft in Arbeit, ihre größte Intensität entwickelt und jenseits dieser Position, wenn auch abklingend, noch beibehält.

Um auch bei Höchstdrehzahlen eine nahezu widerstandslose Füllung des inneren Verbrennungsraums 26 zu gewährleisten, sind einseitig die Wände der Hohlkugeln 1, 2 durchdringende Füllkanäle 6 vorgesehen, deren Ladeströme im Verdichtungstakt sich mit dem durch die Strahldüse 5 in den inneren Verbrennungsraum 26 strömenden Ladestrom kreuzen und für eine den Mischungsgrad der Charge weiter begünstigende Turbulenz sorgen. Diese Füllkanäle 6 schließen sich am Ende des Kompressionshubes infolge der durch den Ausschlag des Pleuels 4 bewirkten Schwenkung der Hohlkugeln 1, 2 gegenüber einer Kante 37 des Gleitkolbenteils 3.

Um die nach der Erkenntnis des Erfinders aus der Verbrennung der Charge im erfindungsgemäßen System des "Burgsmüller-Strahlreaktionsimpulses zwischen kommunizierenden Verbrennungsräumen" um die Hohlkugeln 1, 2 entstehende, ganz besonders hohe, zumindest das herkömmlich verwendete Material für Kolben etc. sonst mit Sicherheit vernichtende Wärme erfindungsgemäß positiv zu nutzen, ist ein Zwischenraum 7 zwischen den Hohlkugeln 1, 2 als eine Art "Papinscher Topf" ausgebildet und wird über einen Kanal 8 im Gleitkolbenteil 3 und durch eine Bohrung 32 in der Wand der Hohlkugel 2 vorteilhaft im unteren Totpunkt von einer in Intervallen zu beschickenden Hochdruck-Spritzdüse 9 mit vorzugsweise vorgewärmtem, entkalktem Wasser oder auch gereinigtem Regenwasser oder auch einer anderen geeigneten verdampfenden Flüssigkeit in entsprechend geregelter Menge versorgt.

Um eine Drehung des Gleitkolbenteils 3 um seine Längsachse zu verhindern, ist es mit einer Längsnut 35 versehen, in die ein Vorsprung 36 der Hohlkugel 2 eingreift.

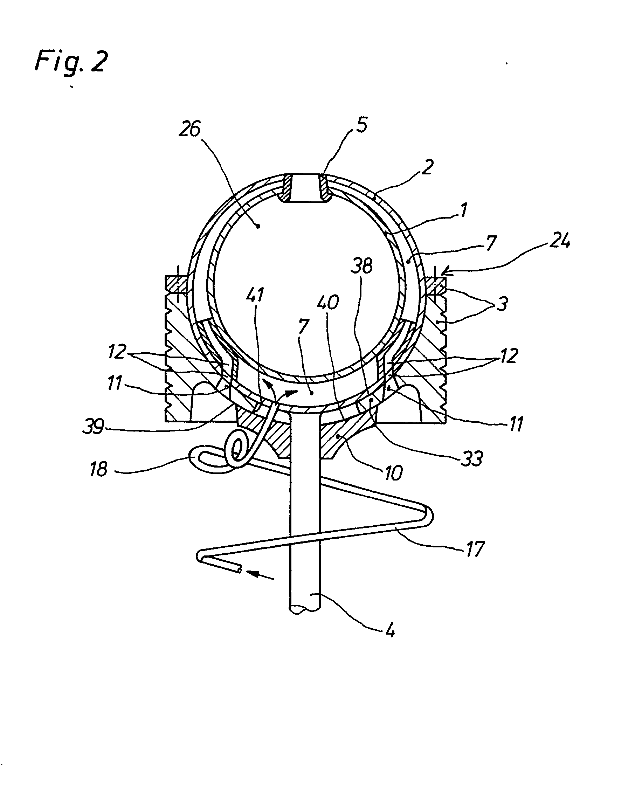

Durch eine aus einem Kapillar-Stahlrohr bestehende, konisch gewickelte, gehärtete Kegelfeder 17 hindurch kann die Wasserbeschickung des Zwischenraums 7 bei Verzicht auf das System 9, 8, 32 alternativ über einen Zuführungsnippel 19 von einer kontinuierlich fördernden Pumpe, die aber bezüglich der zu fördernden Menge von einem Temperaturfühler 20 beeinflußt wird, unter Umständen günstiger erfolgen. An ihrem oberen Ende ist die Kegelfeder 17 quer zu einer Bewegungsebene des Pleuels 4 zu einer Schraubenfeder 18 (s. auch Fig. 2) gewickelt. Dadurch werden die Schwenkbewegungen des Pleuels 4 gegenüber einem Kurbelgehäuse 27 durch die Feder 17, 18 besser kompensiert. Bei einer nach einigen Betriebssekunden erreichten Tempe-

ratur von ca. 375°C im Zwischenraum 7 zwischen den Wänden der Hohlkugeln 1, 2 ergibt sich darin ein Dampfdruck von bis zu 200 bar. Die jeweils neu forciert zugeführte Wassermenge wird durch das Auf und Ab des Kolbenaggregats 24 und seine eigene Beharrung zerstäubt und besonders schnell verdampft. Das führt zu einer gleichmäßigen Materialwärme um die ganzen Hohlkugeln 1, 2 herum einschließlich des Gleitkolbenteils 3. Das Gleitkolbenteil 3 weist unten einen Flansch 33 auf, der innen eine durch den Rest des Gleitkolbenteils 3 fortgesetzte erste, konkave Kalotte 38 und außen eine damit konzentrische zweite, konvexe Kalotte 39 aufweist. Die zweite Kalotte 39 steht in Gleitberührung mit einer komplementären dritten, konkaven Kalotte 40 an einer mit dem Pleuel 4 beispielsweise hartverlöteten Stützkonsole 10. Der Flansch 33 besitzt einen zentralen Durchbruch 41 im Schwenkbereich des Pleuels 4. Der Flansch 33 ist ferner zu beiden Seiten der Bewegungsebene des Pleuels 4 mit einem Steuerdurchbruch 11 ausgerüstet, die mit korrespondierenden, zur Pleuelachse parallel und in Fig. 1 hintereinander liegenden Mündungen zweier Strahldüsen 12 Schieberventile bilden. Die Strahldüsen 12 befinden sich in dem Zwischenraum 7 und lassen die hochgespannten Dampfstrahlen stets parallel zum Pleuel 4 nach unten austreten, wenn der Weg des Kolbenaggregats 24 vom unteren zum oberen Totpunkt hin beginnt. Diese Einzelheiten sind besonders deutlich in Fig. 2 zu erkennen.

Die Reaktionskräfte der nach unten gerichteten Hochdruck-Dampfstrahlen ziehen über das Pleuel 4 den Kurbelzapfen 15 nach oben, und zwar wiederum stets in der Normalen zum Kurbelzapfen, und leisten dabei weitere beachtliche Antriebsarbeit, während lästige, bremsende Querkräfte vermieden sind.

Das im komprimierbaren Volumen möglichst eng gehaltene Kurbelgehäuse 27 wird von diesem aus den Düsen 12 ausstrahlenden Hochdruck-Dampf zugleich unter Überdruck gesetzt, so daß das Kolbenaggregat 24 zusätzlich zum oberen Totpunkt getrieben wird. Es ergibt sich also eine weitere Nutzung des Hoch- bzw. Mitteldruckdampfes.

Aus Auslaßschlitzen 13 in der Wand eines Zylinders 28 entweicht schließlich - wie bei einer schnellaufenden Gleichstrom-Dampfmaschine - der restlich expandierte Dampf zu einem evtl. vorgesehenen, nicht gezeichneten Wasser-Vorwärmer oder Kondensor hin.

Mit diesem System wird demnach der herkömmliche Abflußsinn der Wärme vom überhitzten Kolben zum gekühlten Zylinder, Zylinderkopf, etc. hin ins wärmeabführende, da- her unwirtschaftliche Wärmeabstrahlkühlsystem, gewandelt. Die anfallende Wärme wird um das Kolbenaggregat 24 herum umgesetzt in kinetische Energie, so daß der Abflußsinn der Wärme, dem Wärmegefälle entsprechend, vom Zylinder 28, vom Zylinderkopf 23, usw. zum relativ kühlen Kolbenaggregat 24 hin sich zwangsläufig ergibt.

Es ist zweckmäßig, besonders auch den Zylinderkopf 23 aus einem gut wärmeleitenden, festen Material zu erstellen, desgleichen auch den Zylinder 28, das Gleitkolbenteil 3, wie vor allem die Hohlkugeln 1, 2. Die gegenseitigen Abdichtungen, besonders diejenige zwischen Zylinderkopf 23 und Zylinder 28, sind im Interesse der guten Wärmeübertragung zum Kolbenaggregat 24 hin mit reiner Kupferfolie (nicht Kupfer-Asbest-Packung) vorzunehmen. Schließlich ist die ganze Maschine gegen Wärmeverlust nach außen mit einer Wärmedämmschicht 14 hochgradig wärmedämmend isoliert.

So werden vorteilhaft alle Bauteile, die unmittelbar miteinander in Berührung stehen, aus gleichem geeigneten Material erstellt, insbesondere der Zylinder 28, das Gleitkolbenteil 3 und die Hohlkugeln 1, 2, und so bezüglich der Größe ihrer - temperaturbedingten - Ausdehnung jederzeit zumindest annähernd gleich sein. Daher können die sonst gebräuchlichen, spielausgleichenden Kolbenringe durch wenige Labyrinthnuten 29 in der dem Zylinder 28 zugewandten Oberfläche des Gleitkolbenteils 3 in Gleitsitzpassung ersetzt werden, so daß größere Gleitflächen mit günstigerem Wärmeübergang erzielt werden.

Da sämtliche gleitenden Flächen laufend mit Wasserpartikeln benetzt sind, und das Verhältnis Leistung : Querkräften ausschlaggebend besser wird, kann im günstigsten Falle auf Ölschmierung ganz verzichtet und damit der Umweltverschmutzung begegnet werden. Die Wälzlager an den Kurbelwellenzapfen und ein Wälzlager 30 am Kurbelzapfen 15 können mit Lebensdauer-Schmierstoffüllung bei entsprechender Kapselung ausgerüstet sein.

Ein möglichst enger Schlitz 16 im Kurbelgehäuse 27 führt gelegentlich anfallendes Kondensat, forciert vom periodischen Dampfdruck und der Reibung an den Stirnen von Schwungscheiben 31, zu einer ggf. vorgesehenen Wasseraufbereitung hin ab.

Die Erfindung kann sowohl beim Zweitakt- als auch beim Viertakt-Ottomotor, aber bei richtiger Auslegung auch beim Dieselmotor aller Spülarten angewendet werden.

Die bei der herkömmlichen Grundform des Verbrennungsmotors erforderlichen Steuerorgane, Steuerschlitze bzw. Steuerventile sind der besseren Übersicht wegen in der Zeichnung fortgelassen worden.

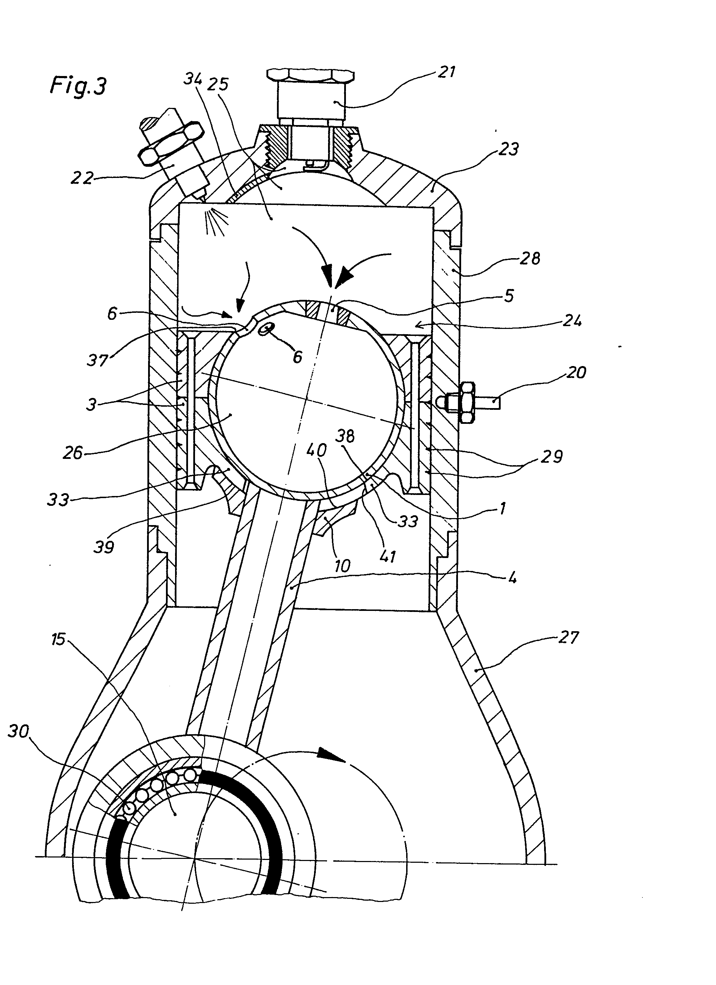

Fig. 3 zeigt eine andere Ausführungsform, bei der gleiche Teile wie in den Fig. 1 und 2 mit gleichen Bezugszahlen versehen sind. Hier ist die äußere Hohlkugel 2 gemäß Fig. 1 und 2 weggelassen und die den inneren Verbrennungsraum 26 enthaltende Hohlkugel 1 unmittelbar mit dem Pleuel 4 fest verbunden und direkt in der Kalotte 38 des Gleitkolbenteils 3 schwenkbar gelagert. Dabei ist zwar die der Erfindung zugrundeliegende Teilaufgabe des Erreichens einer besonders günstigen Übertragung der von dem Reaktionsimpuls des aus der Strahldüse 5 austretenden Gasstrahls herrührenden Kraft in Achsrichtung des Pleuels 4 auf das Pleuel 4 in jeder Lage des Pleuels 4 bzw. des Kurbelzapfens 15 erhalten. Da der gemäß Fig. 1 und 2 der Dampfbildung dienende Zwischenraum 7 in Fig. 3 jedoch weggefallen ist, ist auch die gemäß Fig. 1 und 2 stattfindende Umsetzung von Dampf in mechanische Energie durch Strahlimpuls oder Expansion im Kurbelgehäuse 27 wegfallen sowie die infolge der aufzubringenden Verdampfungswärme bei der Verdampfung des in den Zwischenraum 7 eingeführten Wassers erfolgende Kühlwirkung. Es findet daher gemäß Fig. 3 die konventionelle Kühlung des Zylinders 28 etc. durch Luft oder Wasser statt. Der Zylinderkopf 23 kann innen mit einer hochwarmfesten Beschichtung 34 gepanzert sein.

Die Ausführungsform gemäß Fig. 3 eignet sich sowohl für die Neuausstattung als auch für die Umrüstung von Mehrzylinder-Kraftfahrzeug-Verbrennungsmotoren durch Austausch von Kolben und Pleueln. Es können interessante Ersparnisse an Brennstoff erwartet werden. Dabei wird zeitlich nach der Initial-Zündung, aber vor dem oberen Totpunkt, durch die in Richtung der Umlaufebene dann vorteilhaft oval ausgeführte Strahldüse 5 hindurch aus einer Spritzdüse 22 des Zylinderkopfes 23 in den inneren Verbrennungsraum 26 ein nach der jeweiligen Belastung der Maschine bemessenes Quantum Wasser eingespritzt oder auf andere Weise eingeführt. Dadurch wird einerseits die Temperatur um das vereinfachte Kolbenaggregat 24 herum in erträglichen Grenzen gehalten, aber auch das Gewicht des Strahlvolumens, seine Energie und damit die Reaktion des Strahles entsprechend angehoben, so daß besonders bei durchaus praktizierbarer Eindämmung der Wärmeabführung zum Kühler hin, ein Gutteil dieser Abwärme für die Leistungssteigerung der Maschine genutzt werden kann. Die Vorstellung, damit die Anzahl der Zylinder eines Triebwerks gar auf beispielsweise die Hälfte der bisher fabrikmäßig vorgesehenen zu reduzieren und dennoch genügend Leistung zu erzielen, ist angesichts der weltweiten Rohstoff-Misere sehr attraktiv.

Angesichts dieser Misere ist es gar erstrebenswert, die umzustellenden Verbrennungs-Kolben-Motoren - sofern nicht schon ab Werk so ausgerüstet - auf Direkteinspritzung des Brennstoffes wie üblich vor Beginn des Verbrennungs- oder Arbeitshubes umzurüsten. Ein solcher Motor kann dann so betrieben werden, daß in jeden Zylinder vor einem Arbeitshub Brennstoff eingespritzt und beim nächsten Arbeitshub desselben Zylinders - bei völligem Verzicht auf die Einspritzung von Brennstoff - ein verdampfendes Medium vornehmlich in den inneren Verbrennungsraum 26 hinein eingespritzt wird. Dies wirkt sich als Strahlreaktion bzw. Dampfexpansion energiespendend aus.

Man hat dann die volle Anzahl der Zylinder bei günstigerer Trennung von Brennstoff und verdampfendem Medium in Aktion, aber insbesondere einen erheblich geringeren Brennstoffverbrauch zu erwarten, sofern man die Kühlmantelräume um die Zylinder oder die Kühlrippen an den Zylindern mit Isolierstoffen umgibt bzw. ausfüllt und damit die Verdampfung des Mediums in jeder Beziehung optimiert und dabei der Vernichtung der hochbeanspruchten Bauteile durch überhöhte Wärme wirksam vorbeugt.

Die Einspritzkolbenpumpen für Brennstoff bzw. Membranpumpen für verdampfendes Medium laufen dann nur bei halber Drehzahl und haben zusammen etwa den Energiebedarf wie bisher die Einspritzpumpe.

Die Erfindung kann auch mit Vorteil bei einem Doppelkolben-Motor mit in ein und demselben Zylinder befindlichen zwei gegenläufigen Kolben angewendet werden. Man kann dann z.B. jeden inneren Verbrennungsraum 26 durch vier auf einem Kreis in gleichen Abständen voneinander angeordnete Strahldüsen 5 mit dem gemeinsamen äußeren Verbrennungsraum verbinden. Dabei sind die Strahldüsen 5 des einen Kolbenaggregats 24 vorzugsweise in Umfangsrichtung um 45° gegenüber den Strahldüsen 5 des anderen Kolbenaggregats 24 versetzt. Die aus den Strahldüsen 5 austretenden, nach der Durchdringung der noch unter einigem Druck stehenden Schwaden im gemeinsamen äußeren Verbrennungsraum noch recht potenten Strahlenbündel wirken dann auf das gegenüberliegende Kolbenaggregat 24 jeweils noch leistungsfördernd ein, während es bei dem erfindungsgemäßen Motor mit Einkolbenzylinder auch zukünftig zu dulden sein wird, diese Rest-Energien am Zylinderkopf 23 nahezu nutzlos zu vertun.

Es sei schließlich zur Verbrennungs-Maschine nach der Erfindung noch bemerkt:

Eine einzylindrige (beispielsweise fremdgeladene oder fremdgespülte) 5.000 U/min drehende Zweitakt-Verbrennungs-Kolbenkraftmaschine würde nach der Erfindung 10.000 Krafthübe/min vollbringen, nämlich

  5.000 vom oberen Totpunkt zum unteren Totpunkt hin

+  5.000 vom unteren Totpunkt zum oberen Totpunkt hin,

also die doppelte Anzahl von Krafthüben gegenüber bisher.

Eine einzylindrige 5.000 U/min drehende Viertaktmaschine würde nach der Erfindung zukünftig 7.500 Krafthübe/min vollbringen, nämlich

  2.500 vom oberen zum unteren Totpunkt

+  5.000 vom unteren zum oberen Totpunkt hin,

also das Dreifache an Krafthüben gegenüber bisher.

0082942

Daraus sind zukünftig, trotz des diesbezüglichen Zurückbleibens des Viertakters gegenüber dem Zweitakter, die
Chancen für den Viertakter gegenüber dem konventionellen
Viertakter drastisch angehoben.

Patentanwälte
Dipl.-Ing. Horst Röse
Dipl.-Ing. Peter Kosel

DIPL.-ING. HORST RÖSE     DIPL.-ING. PETER KOSEL
PATENTANWÄLTE

C082942

Unsere Akten-Nr.: 1716/14 EP     Bad Gandersheim, 10. Nov. 1982
01 Karl BURGSMÜLLER

PATENTANSPRÜCHE

1. Hubkolben-Brennkraftmaschine mit einem in einem Zylinder (28) und/oder in einem Zylinderkopf (23) angeordneten äußeren Verbrennungsraum (25), dessen Volumen sich durch die Bewegung des mit einem an einem Kurbelzapfen (15) angelenkten Pleuel (4) verbundenen Kolbens verändert, und mit einem in dem Kolben ausgebildeten inneren Verbrennungsraum (26) von gleichbleibendem Volumen, der über wenigstens eine Strahldüse (5) in ständiger Verbindung mit dem äußeren Verbrennungsraum (25) steht, wobei bei der Verbrennung zündfähigen Gemisches in dem inneren Verbrennungsraum (26) ein Schubstrahl durch die wenigstens eine Strahldüse (5) in den äußeren Verbrennungsraum (25) übertritt,
dadurch gekennzeichnet, daß der innere Verbrennungsraum (26) durch den Hohlraum eines relativ zu dem Pleuel (4) festen und relativ zu einem an dem Zylinder (28) geführten Gleitkolbenteil (3) bewegbar abgestützten Hohlkörpers (1) gebildet ist, wobei das Gleitkolbenteil (3) und der Hohlkörper (1) zu gemeinsamer Hubbewegung miteinander gekuppelt sind, und daß eine Längsachse der wenigstens einen Strahldüse (5) koaxial mit oder parallel zu einer Längsachse des Pleuels (4) verläuft.

2. Maschine nach Anspruch 1, dadurch gekennzeichnet, daß der Hohlkörper (1) zumindest in einem mit einer ersten, konkaven Kalotte des Gleitkolbenteils (3) in Berührung tretenden Bereich als zu der ersten Kalotte komplementäre, fest mit dem Pleuel (4) verbundene Hohlkugel (1) ausgebildet ist, daß das Gleitkolbenteil (3) geteilt ist, und daß die erste Kalotte größer als eine Halbkugel ist.

-2-
PK/La

3. Maschine nach Anspruch 1, dadurch gekennzeichnet, daß der Hohlkörper (1) innerhalb eines äußeren Hohlkörpers (2) angeordnet ist, daß der äußere Hohlkörper (2) zumindest in einem mit einer ersten Kalotte des Gleitkolbenteils (3) in Berührung tretenden Bereich als zu der ersten Kalotte komplementäre, fest mit dem Pleuel (4) verbundene äußere Hohlkugel (2) ausgebildet ist, daß das Gleitkolbenteil (3) geteilt ist, daß die erste Kalotte größer als eine Halbkugel ist, und daß die wenigstens eine Strahldüse (5) eine Wand des äußeren Hohlkörpers (2) durchdringt.

4. Maschine nach Anspruch 3, dadurch gekennzeichnet, daß zwischen dem äußeren Hohlkörper (2) und dem Hohlkörper (1) ein Zwischenraum (7) geschaffen ist, daß in den Zwischenraum (7) periodisch (9,8,32;19,17,18) oder ständig (19,17,18) eine bei der Betriebstemperatur der Hohlkörper (1,2) verdampfende Flüssigkeit einbringbar ist, daß wenigstens eine Dampf aus dem Zwischenraum (7) ableitende Strahldüse (12) den äußeren Hohlkörper (2) durchdringt, wobei die Längsachse ihrer Mündung parallel zur Längsachse des Pleuels (4) verläuft, daß die Mündung durch einen Steuerdurchbruch (11) in der ersten Kalotte zu öffnen und verschließbar ist, und daß eine oder mehrere Auslaßöffnungen (13,16) für den Dampf oder sein Kondensat in dem Zylinder (28) und einem Kurbelgehäuse (27) vorgesehen sind.

5. Maschine nach Anspruch 4, dadurch gekennzeichnet, daß das Gleitkolbenteil (3) in der ersten Kalotte in einer durch seine Längsachse verlaufenden Ebene eine Längsnut (35) aufweist, in die ein Vorsprung (36) des äußeren Hohlkörpers (2) eingreift.

6. Maschine nach Anspruch 4 oder 5, dadurch gekennzeichnet, daß die Flüssigkeit durch eine normalerweise durch das Gleitkolbenteil (3) verschlossene Hochdruck-Spritzdüse (9) in dem Zylinder (28) sowie einen Kanal (8) in dem Gleitkolbenteil (3) und eine Bohrung (32) in dem äußeren Hohlkörper (2), die mit einander und mit der Hochdruck-Spritzdüse (9) in Fluchtung bringbar sind, in den Zwischenraum (7) einbringbar ist.

7. Maschine nach Anspruch 4 oder 5, dadurch gekennzeichnet, daß die Flüssigkeit durch einen stationären Zuführungsnippel (19) und eine daran angeschlossene, in den Zwischenraum (7) mündende Feder (17,18) aus Rohr in den Zwischenraum (7) einbringbar ist.

8. Maschine nach einem der Ansprüche 3 bis 7, dadurch gekennzeichnet, daß der Hohlkörper (1) bezüglich des äußeren Hohlkörpers (2) von dem Pleuel (4) weg exzentrisch angeordnet ist.

9. Maschine nach einem der Ansprüche 1 bis 8, dadurch gekennzeichnet, daß der äußere Verbrennungsraum (25) zusätzlich zu der wenigstens einen Strahldüse (5) durch wenigstens einen durch eine Kante des Gleitkolbenteils (3) steuerbaren Füllkanal (6) in einer Wand des Hohlkörpers (1) und gegebenenfalls in einer Wand des äußeren Hohlkörpers (2) vorübergehend mit dem inneren Verbrennungsraum (26) verbindbar ist.

10. Maschine nach einem der Ansprüche 1 bis 9, dadurch gekennzeichnet, daß der Zylinder (28) und der Zylinderkopf (23), gegebenenfalls auch das Kurbelgehäuse (27), von einer Wärmedämmschicht (14) umgeben sind.

Patentanwälte
Dipl.-Ing. Horst Röse
Dipl.-Ing. Peter Kosel

Fig.1

Antrag vom 10. November 1982

Fig. 2

*Fig.3*

0082942

Nummer der Anmeldung

EP 82 11 0394

# EUROPÄISCHER RECHERCHENBERICHT

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A,D | DE-A-3 012 022 (BURGSMÜLLER) <br> * Seite 1, Absatz 1,2 * <br> --- | 1 | F 02 B 75/32 <br> F 16 J 1/22 <br> F 02 B 19/10 <br> F 02 B 23/08 <br> F 02 F 3/28 |
| A,D | DE-A-2 815 814 (DAVIS) <br> * Seite 8, Absatz 2 * <br> --- | 1 | |
| A | FR-A-2 335 699 (KRÜMMER) <br> * Seite 4, Absatz 1-4 * <br> ----- | 1 | |
| | | | **RECHERCHIERTE SACHGEBIETE (Int. Cl. ³)** <br><br> F 02 B <br> F 02 F <br> F 16 J |

Der vorliegende Recherchenbericht wurde für alle Patentansprüche erstellt.

| Recherchenort <br> DEN HAAG | Abschlußdatum der Recherche <br> 25-03-1983 | Prüfer <br> WASSENAAR G. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologisches Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82